# EUROPEAN PATENT APPLICATION

(11) **EP 4 710 772 A1**
(43) Date of publication of application: **18.03.2026**
(21) Application number: 24803251.8
(22) Date of filing: 15.02.2024
(51) Int. Cl.: A22C 13/00, B65D 65/02, D21H 11/12, D21H 17/41, D21H 19/12, D21H 21/18, D21H 27/10

(54) **PAPER BASE MATERIAL FOR FIBROUS CASING BASE MATERIAL**

(30) Priority: 10.05.2023 JP 2023077625
(71) Applicant: Nippon Paper Papylia Co., Ltd., Fuji-shi Shizuoka 417-0852 (JP)
(72) Inventor: HANDA, Haruhisa, Tokyo 101-0062 (JP); KOYAMA, Munenaka, Tokyo 101-0062 (JP); YAMAMOTO, Mitsuyasu, Tokyo 101-0062 (JP)
(74) Representative: Hasegawa, Kan
(86) International application number: PCT/JP2024/005176
(87) International publication number: WO 2024/232136

(57) **Abstract**

An object is to provide a paper substrate for a fibrous casing substrate, the paper substrate not requiring pre-impregnation with a viscose liquid and having sufficient wet strength and alkali resistance during viscose coating processing. Provided as a solution is a paper substrate for a fibrous casing substrate, the paper substrate including a natural fiber and a paper strength additive, wherein the paper strength additive includes a cationic paper strength additive and an anionic paper strength additive that are both applied by internal addition and external addition.

## Description

### Technical Field

The present invention relates to a paper substrate for a fibrous casing substrate.

### Background Art

Casings used for meat processing of ham, sausage, bacon, and the like include natural casings (animal intestine) and artificial casings (cellulose casings, collagen casings, and plastic casings). The artificial casings have the advantage of being inexpensive, being hygienic, and being able to provide a stable product size, and in particular, fibrous casings, which are classified as cellulose casings, are widely used because they have high strength and can be smoked.

A fibrous casing is obtained by impregnating a paper substrate made of cellulose pulp with viscose and performing coagulation and regeneration treatment. The paper substrate is required to have wet strength and alkali resistance (resistance to alkaline liquids). In the related art, such a paper substrate has been subjected to pre-impregnation with a low-concentration viscose liquid and regeneration treatment in order to be provided with wet strength and alkali resistance sufficient to withstand viscose impregnation. PTL 1 proposes a paper substrate to which wet strength and alkali resistance have been imparted by adding guar gum and a polyamide epichlorohydrin resin to a pulp slurry to prepare a papermaking raw material and performing papermaking. PTL 2 proposes a paper substrate that is composed of two types of pulp fibers defined by their fiber coarseness and that has good viscose impregnability during viscose processing, alkali resistance, and high wet strength.

However, in recent years, since viscose processing incurs high manufacturing costs, and there is a demand for addressing environmental issues due to generation of hydrogen sulfide, suppliers of paper substrates have been studying chemicals that serve as alternatives to pre-impregnation with viscose.

### Citation List

### Patent Literature

PTL 1: Japanese Unexamined Patent Application Publication No. 6-294094
PTL 2: Japanese Unexamined Patent Application Publication No. 6-141760

### Summary of Invention

### Technical Problem

As paper substrates for fibrous casing substrates, those obtained without using a viscose liquid have been proposed in place of those subjected to pre-impregnation with a viscose liquid and regeneration treatment, but sufficient performance has not been achieved with respect to the wet strength and alkali resistance in viscose coating processing for use as fibrous casings.

Thus, there has been a demand for a paper substrate for a fibrous casing substrate, the paper substrate not requiring pre-impregnation with a viscose liquid and having sufficient wet strength and alkali resistance during viscose coating processing.

### Solution to Problem

The solution to the problem of the present invention is as follows.
1. A paper substrate for a fibrous casing substrate, the paper substrate including a natural fiber and a paper strength additive,
   wherein the paper strength additive includes a cationic paper strength additive and an anionic paper strength additive that are both applied by internal addition and external addition.
2. The paper substrate for a fibrous casing substrate according to 1., wherein an amount of hemp-like pulp relative to a total amount of the natural fiber is 40 mass% or more.
3. The paper substrate for a fibrous casing substrate according to 1. or 2., the natural fiber has a total freeness (Canadian Standard Freeness) of 450 ml or more and 700 ml or less.
4. The paper substrate for a fibrous casing substrate according to any one of 1. to 3., wherein a wet tensile strength with respect to an aqueous sodium hydroxide solution having a concentration of 5%, as measured according to JIS P 8135:1998, is 3.0 N/15 mm or more.
5. The paper substrate for a fibrous casing substrate according to any one of 1. to 4., wherein a contact angle at 20 seconds after dropping of 4 µl of ion-exchanged water is 60° or less.

### Advantageous Effects of Invention

According to the present invention, a paper substrate for a fibrous casing substrate, the paper substrate not requiring pre-impregnation with a viscose liquid and having sufficient wet strength and alkali resistance during viscose coating processing, can be provided.

### Description of Embodiments

A paper substrate for a fibrous casing substrate (hereinafter also referred to as a paper substrate) according to the present invention includes a natural fiber and a paper strength additive. The paper strength additive includes a cationic paper strength additive and an anionic paper strength additive that are both applied by internal addition and external addition.

The paper substrate according to the present invention can be manufactured by adding a cationic paper strength additive and an anionic paper strength additive to a pulp slurry containing natural fiber pulp to prepare a papermaking raw material, subjecting the papermaking raw material to papermaking, and further applying the cationic paper strength additive and the anionic paper strength additive by size press coating, and can be manufactured with a paper machine used in known papermaking applications.

### (Natural fiber)

As the natural fiber, cellulose fibers such as wood pulp including softwood pulp and hardwood pulp; and non-wood pulp including bast fibers such as flax, ramie, jute, kenaf, hemp, Kozo (Paper mulberry), and Mitsumata (Paper birch), hard fibers such as bagasse, bamboo, and esparto, seed hair fibers such as cotton pulp, and leaf sheath and leaf fibers such as abaca and sisal can be used, and one or two or more of these can be used.

To secure the wet strength and air permeability required for the paper substrate, hemp-like pulp and softwood pulp, which have a relatively long fiber length, are preferably used as the natural fiber, and these can be used as a mixture. The amount of hemp-like pulp relative to the total amount of the natural fiber is preferably 40 mass% or more. When the amount of hemp-like pulp is less than 40 mass%, the sufficient wet strength and alkali resistance may be lacking during viscose coating processing of the paper substrate, resulting in breakage of the paper substrate. The amount of hemp-like pulp relative to the total amount of the natural fiber is more preferably 45 mass% or more. As the hemp-like pulp, any hemp-like pulp used in the papermaking field, such as flax, ramie, jute, kenaf, hemp, abaca, or sisal, can be used without particular limitation.

The paper substrate according to the present invention can also include a non-natural fiber such as a regenerated cellulose fiber as long as the effects of the present invention are not impaired. However, the proportion of the natural fiber relative to all the papermaking fibers is preferably 80 mass% or more, more preferably 90 mass% or more, still more preferably 95 mass% or more, even more preferably 98 mass% or more, yet more preferably 99 mass% or more, most preferably 100 mass%.

In the present invention, the Canadian Standard Freeness (hereinafter also referred to as the freeness) of the natural fiber alone for use, as measured according to JIS P 8121-2:2012, is preferably 450 ml or more and 800 ml or less. The freeness of all the papermaking fibers contained in the paper material (when two or more natural fibers are used as a mixture, the freeness is a freeness measured after the natural fibers are mixed at a predetermined ratio, and is hereinafter also referred to as the total freeness) is preferably 450 ml or more and 700 ml or less. When the total freeness is less than 450 ml, the air permeability may be poor, resulting in poor impregnability with viscose in viscose coating processing. When the total freeness is higher than 700 ml, the sufficient wet strength and alkali resistance may be lacking during viscose coating processing of the paper substrate, resulting in breakage of the paper substrate.

### (Paper strength additive)

In the paper substrate according to the present invention, both the cationic paper strength additive and the anionic paper strength additive are applied by internal addition and external addition. Furthermore, a neutral-type paper strength additive can also be used in combination.

As the paper strength additive, polyamide epichlorohydrin resins, polyamine epichlorohydrin resins, polyamide polyamine epichlorohydrin resins, melamine formaldehyde resins, urea formaldehyde resins, glyoxal-modified polyacrylamides, Hofmann-modified polyacrylamides, anion-modified polyacrylamides, dialdehyde starch, polyethyleneimines, epoxidized polyamides, and the like are generally used, and these cationic-type and anionic-type paper strength additives can be used alone or as a mixture of two or more without limitation.

The paper substrate according to the present invention includes at least four paper strength additives: cationic and anionic ones internally added, and cationic and anionic ones externally added. The paper strength additive internally added and the paper strength additive externally added may be the same or different. As the internally added paper strength additives, it is preferable to use a cationic polyamine epichlorohydrin resin as the cationic paper strength additive and an anionic polyacrylamide resin as the anionic paper strength additive from the viewpoint of uniformly improving the wet strength across the entire paper substrate. As the externally added paper strength additives, it is preferable to use a cationic polyamide epichlorohydrin resin as the cationic paper strength additive and an anionic polyacrylamide resin as the anionic paper strength additive from the viewpoint of improving the wettability with a viscose liquid during viscose coating processing and also suppressing a decrease in wet strength due to penetration of the viscose liquid.

The amount of each paper strength additive is not particularly limited, and is preferably 0.1 mass% or more and 5.0 mass% or less relative to the amount of the natural fiber, more preferably 0.3 mass% or more, still more preferably 0.5 mass% or more, and more preferably 4.0 mass% or less, still more preferably 3.0 mass% or less. The total amount of the paper strength additives is preferably 10 mass% or less, more preferably 9 mass% or less, still more preferably 8 mass% or less, relative to the amount of the natural fiber. The amounts of the paper strength additives may be the same or different.

### (Manufacturing method)

The paper substrate according to the present invention can be manufactured using a method used in known papermaking applications. Specifically, it can be manufactured using a Fourdrinier paper machine, a cylinder paper machine, an inclined short-wire paper machine, a twin-wire paper machine, an on-top hybrid paper machine, a gap former machine, or the like.

The internally added paper strength additives are internally added by blending with the papermaking raw material, and the method of applying the externally added paper strength additives to base paper can be appropriately selected from impregnation processing using a mangle coater, a size press coater, or the like, and surface coating using a gate roll coater, a blade coater, a bar coater, a gravure coater, a die coater, a curtain coater, a spray coater, or the like.

The basis weight of the paper substrate is preferably 15 g/m² or more and 30 g/m² or less. A basis weight of less than 15 g/m² may result in insufficient alkali resistance, and a basis weight of more than 30 g/m² may result in poor impregnability with viscose in viscose coating processing.

The machine-direction dry tensile strength of the paper substrate measured in accordance with JIS P 8113:2006 is preferably 7.0 N/15 mm or more, and the machine-direction wet tensile strength measured in accordance with JIS P 8135:1998 is preferably 4.0 N/15 mm or more. When the tensile strengths (dry and wet) of the paper substrate are less than the above-mentioned values, the paper substrate may break during viscose coating processing. The machine-direction dry tensile strength of the paper substrate is more preferably 10.0 N/15 mm or more, still more preferably 14.0 N/15 mm or more. The machine-direction wet tensile strength of the paper substrate is more preferably 4.5 N/15 mm or more, still more preferably 5.0 N/15 mm or more.

The ratio (cross direction/machine direction) of the cross-direction wet tensile strength to the machine-direction wet tensile strength of the paper substrate is preferably 50% or more. If this ratio is less than 50%, casing breakage may occur during a meat stuffing process. This ratio is more preferably 60% or more, still more preferably 70% or more.

The alkali resistance of the paper substrate can be evaluated based on the tensile strength (machine direction) measured by a method in accordance with JIS P 8135:1998 after 30-second immersion in an aqueous sodium hydroxide solution having a concentration of 5% instead of water. For the alkali resistance of the paper substrate, this tensile strength is preferably 3.0 N/15 mm or more. If this value is less than 3.0 N/15 mm, breakage of the paper substrate may occur during viscose coating processing. The tensile strength is more preferably 3.1 N/15 mm or more, still more preferably 3.2 N/15 mm or more.

The paper substrate preferably has a contact angle of 60° or less at 20 seconds after dropping of 4 µl of ion-exchanged water. If the contact angle is more than 60°, the wettability with a coating liquid may be insufficient during viscose coating processing, resulting in failure to achieve uniform coating. The contact angle is more preferably 56° or less, still more preferably 52° or less.

### EXAMPLES

### (Example 1)

Hemp-like pulp (abaca pulp, from Ecuador) having a Canadian Standard Freeness (CSF) of 750 ml and hemp-like pulp (abaca pulp, from the Philippines) having a Canadian Standard Freeness (CSF) of 500 ml were separately provided. These pulps each in an amount of 50 parts by mass were mixed to obtain a natural fiber slurry having a total freeness of 625 ml. To the natural fiber slurry, a polyacrylamide resin (HERCOBOND 2515AP, non-volatile content 15%, pH 6.5 to 7.5/25°C, manufactured by RIKENGREEN CO., LTD.) as an anionic paper strength additive in an amount of 0.7% on a solid basis relative to the natural fiber (dry mass) and an aqueous aluminum sulfate solution (liquid aluminum sulfate, non-volatile content 27%, pH 2.1/20°C, manufactured by Asahi Chemical Co., Ltd.) as a fixing agent in an amount of 0.65% on a solid basis relative to the natural fiber (dry mass) were added with stirring. To the mixture, a caustic soda-activated polyamine epichlorohydrin resin (WS4010, non-volatile content 20%, pH 2.5 to 5.0, manufactured by SEIKO PMC CORPORATION) as a cationic paper strength additive in an amount of 1.0% on a solid basis relative to the natural fiber (dry mass) was added with stirring to adjust a papermaking raw material. Using the papermaking raw material, papermaking was performed at a target basis weight of 18 g/m² to obtain a raw paper.

Next, a coating liquid for external addition adjusted to be a 2.1% aqueous solution by mixing a polyamide epichlorohydrin resin (WS4035, non-volatile content 25%, pH 2.5 to 4.5, manufactured by SEIKO PMC CORPORATION) as a cationic paper strength additive and a polyacrylamide resin (HERCOBOND 2515AP, manufactured by RIKENGREEN CO., LTD.) as an anionic paper strength additive in water at a ratio of 8:13 on a solid basis was applied to the raw paper by impregnation using a Hishira copying machine, and dried at a drying temperature of 105°C for 2 minutes to obtain a paper substrate.

### (Example 2)

A paper substrate was obtained in the same manner as in Example 1 except that a natural fiber slurry having a total freeness of 675 ml obtained by mixing hemp-like pulp (abaca pulp, from Ecuador) having a Canadian Standard Freeness (CSF) of 750 ml and hemp-like pulp (abaca pulp, from the Philippines) having a Canadian Standard Freeness (CSF) of 500 ml at a mass ratio of 70:30 was used.

### (Example 3)

Hemp-like pulp (abaca pulp, from Ecuador) having a Canadian Standard Freeness (CSF) of 750 ml and needle bleached kraft pulp (NBKP) having a Canadian Standard Freeness (CSF) of 500 ml were separately provided. These pulps each in an amount of 50 parts by mass were mixed to obtain a natural fiber slurry having a total freeness of 625 ml. A paper substrate was obtained in the same manner as in Example 1 except that this natural fiber slurry was used.

### (Example 4)

A paper substrate was obtained in the same manner as in Example 3 except that the target basis weight was 21 g/m².

### (Example 5)

A paper substrate was obtained in the same manner as in Example 1 except that only NBKP having a Canadian Standard Freeness (CSF) of 500 ml was used as a natural fiber.

### (Comparative Example 1)

A paper substrate was obtained in the same manner as in Example 1 except that the addition of the paper strength additives and the fixing agent by internal addition was not performed.

### (Comparative Example 2)

A paper substrate was obtained in the same manner as in Example 1 except that the application of the paper strength additives by external addition was not performed.

### (Comparative Example 3)

A paper substrate was obtained in the same manner as in Example 3 except that the application of the paper strength additives by external addition was not performed.

The obtained paper substrates were evaluated as follows. The results are shown in Table 1.

### (Evaluation method)

### (1) Basis weight

The basis weight was measured in accordance with JIS P 8124:2011.

### (2) Thickness

The thickness was measured in accordance with JIS P 8118:2014.

### (3) Density

The density was calculated from the values of the basis weight and the thickness.

### (4) Tensile strength

The dry tensile strength was measured in accordance with JIS P 8113:2006.

The wet tensile strength was measured in accordance with JIS P 8135:1998.

### (5) Alkali resistance

The tensile strength was measured by a method in accordance with JIS P 8135:1998 after 30-second immersion in an aqueous sodium hydroxide solution having a concentration of 5% instead of water, and evaluated according to the following criteria.
○: 3.0 N/15 mm or more
Δ: More than 2.5 N/15 mm and less than 3.0 N/15 mm
×: 2.5 N/15 mm or less

### (6) Wettability (contact angle)

Using a dynamic contact angle and absorption tester (FIBRO1100 DAT MKII: manufactured by FIBRO System AB), 4 µl of ion-exchanged water was dropped onto a measurement surface of a sample, and the contact angle at 20 seconds after the dropping was measured. The average of three measurements was determined and evaluated according to the following criteria.
○: 60° or less
×: More than 60°

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Natural (parts by mass) | fiber Hemp-like pulp (750 ml CSF) | 50 | 70 | 50 | 50 | - | 50 | 50 | 50 |
| | Hemp-like pulp (500 ml CSF) | 50 | 30 | - | - | - | 50 | 50 | - |
| | NBKP (500 ml CSF) | - | - | 50 | 50 | 100 | - | - | 50 |
| | Total freeness (ml CSF) | 625 | 675 | 625 | 625 | 500 | 625 | 625 | 625 |
| Paper strength additive (% relative to natural fiber) | | | | | | | | | |
| (Internal addition) | Cationic paper strength additive | 1.0 | 1.0 | 1.0 | 1.0 | 1.0 | - | 1.0 | 1.0 |
| | Anionic paper strength additive | 0.7 | 0.7 | 0.7 | 0.7 | 0.7 | - | 0.7 | 0.7 |
| | Fixing agent | 0.65 | 0.65 | 0.65 | 0.65 | 0.65 | - | 0.65 | 0.65 |
| (External addition) | Cationic paper strength additive | 0.8 | 0.8 | 0.8 | 0.8 | 0.8 | 0.8 | - | - |
| | Anionic paper strength additive | 1.3 | 1.3 | 1.3 | 1.3 | 1.3 | 1.3 | - | - |
| Basis weight | (g/m²) | 19.2 | 19.1 | 19.3 | 21.4 | 19.3 | 19.5 | 18.2 | 19.0 |
| Thickness | (µm) | 61 | 65 | 62 | 64 | 65 | 61 | 60 | 53 |
| Density | (g/cm²) | 0.31 | 0.29 | 0.31 | 0.33 | 0.30 | 0.32 | 0.30 | 0.36 |
| Dry tensile strength | (N/15 mm) MD | 25.0 | 23.5 | 20.0 | 18.7 | 26.0 | 15.2 | 16.3 | 13.0 |
| Wet tensile strength | (N/15 mm) MD | 8.5 | 7.8 | 6.3 | 6.4 | 5.7 | 4.7 | 5.9 | 4.4 |
| Wet tensile strength ratio | (%) CD/MD | 92.0 | 90.3 | 88.6 | 90.3 | 77.3 | 82.3 | 87.3 | 72.2 |
| Alkali resistance | (N/15 mm) MD | 4.0 | 3.6 | 3.4 | 3.3 | 2.8 | 2.5 | 3.5 | 3.0 |
| | <Evaluation> | ○ | ○ | ○ | ○ | Δ | × | ○ | ○ |
| Wettability (contact angle) | (°) | 51.4 | 51.0 | 49.7 | 44.0 | 51.6 | 55.3 | 87.8 | 68.7 |
| | <Evaluation> | ○ | ○ | ○ | ○ | ○ | ○ | × | × |

### · Results

The paper substrates obtained in Examples 1 to 5 according to the present invention were excellent in wet strength, alkali resistance, and wettability and suitable for use as fibrous casing substrates. In particular, the paper substrates obtained in Examples 1 to 4, which contained hemp-like pulp, were more excellent in alkali resistance.

The paper substrate obtained in Comparative Example 1, which contained no internally added paper strength additives, had a low tensile strength after alkali immersion and was poor in alkali resistance.

The paper substrates obtained in Comparative Examples 2 and 3, which contained no externally added paper strength additives, had large contact angles and were poor in wettability during viscose liquid coating.

## Claims

1. A paper substrate for a fibrous casing substrate, the paper substrate comprising a natural fiber and a paper strength additive,
wherein the paper strength additive includes a cationic paper strength additive and an anionic paper strength additive that are both applied by internal addition and external addition.

2. The paper substrate for a fibrous casing substrate according to Claim 1, wherein an amount of hemp-like pulp relative to a total amount of the natural fiber is 40 mass% or more.

3. The paper substrate for a fibrous casing substrate according to Claim 1 or 2, wherein the natural fiber has a total freeness (Canadian Standard Freeness) of 450 ml or more and 700 ml or less.

4. The paper substrate for a fibrous casing substrate according to Claim 1 or 2, wherein a wet tensile strength with respect to an aqueous sodium hydroxide solution having a concentration of 5%, as measured according to JIS P 8135:1998, is 3.0 N/15 mm or more.

5. The paper substrate for a fibrous casing substrate according to Claim 1 or 2, wherein a contact angle at 20 seconds after dropping of 4 µl of ion-exchanged water is 60° or less.
